# EUROPÄISCHE PATENTSCHRIFT

(11) **EP 3 325 210 B1**
(45) Veröffentlichungstag und Bekanntmachung des Hinweises auf die Patenterteilung: **18.08.2021**
(21) Anmeldenummer: 16751473.6
(22) Anmeldetag: 07.07.2016
(51) Int. Cl.: B23Q 1/48, B25J 9/10, B23Q 3/12

(54) **ANDOCK-MASCHINE**
DOCKING MACHINE
MACHINE DE FIXATION

(30) Priorität: 24.07.2015 DE 102015009362
(43) Veröffentlichungstag der Anmeldung: 30.05.2018
(73) Patentinhaber: Klaus-Dieter Klement Verwaltungs GmbH, 06667 Weißenfels (DE)
(72) Erfinder: DEITERT, Heinz, 33442 Herzebrock-Clarholz (DE)
(74) Vertreter: Andrejewski - Honke Patent- und Rechtsanwälte Partnerschaft mbB
(86) Internationale Anmeldenummer: PCT/EP2016/001170
(87) Internationale Veröffentlichungsnummer: WO 2017/016639

(56) Entgegenhaltungen:
- CH-A- 480 138
- FR-A1- 2 986 172

## Beschreibung

### Technisches Gebiet

Die Erfindung betrifft eine Vorrichtung zur spanabhebenden Bearbeitung, vorzugsweise metallischer Werkstücke gemäß dem Oberbegriff des Anspruchs 1 mit einem um eine Werkzeugachse rotierenden Werkzeug sowie ein Verfahren zum Betreiben einer solchen Vorrichtung.

### Stand der Technik

Vorrichtungen der in Rede stehenden Art sind zum Beispiel aus der FR 2 986 172 und der CH 480 138 bekannt und dienen zur spanabhebenden Bearbeitung von Werkstücken. Dabei kommen rotierende Werkzeuge zum Einsatz, die an den Werkstücken angreifen und durch sukzessives Zerspanen der Werkstücke diesen eine vorbestimmte Geometrie geben.

Die Werkzeuge sind dabei an Werkzeugträgern aufgenommen, die relativ zu dem Werkstück verfahrbar sind. Hierdurch wird eine Vorschubbewegung ermöglicht. Ein Hauptvorteil bei der Bearbeitung von Werkstücken mit spanabhebenden Verfahren mit rotierenden Werkzeugen ist es, dass die Herstellung nahezu beliebiger, auch hochkomplexer Werkstückkonturen darstellbar ist. Von daher gibt es eine Vielzahl unterschiedlicher Vorrichtungen der in Rede stehenden Art, die für die individuellen Herstellungsbedürfnisse unterschiedlicher Werkstücktypen konzipiert sind. Ein maßgebliches Kriterium für die Auswahl einer geeigneten Vorrichtung ist dabei die Größe des Werkstücks und die Feinheit der darzustellenden Konturen.

Bei konventionellen Vorrichtungen ergibt sich hierbei jedoch folgendes Problem:
Bei der Bearbeitung großer Werkstücke, bei denen entsprechend große Mengen Materials zerspant werden müssen, um die gewünschte Kontur zu erhalten, kommen entsprechend große Vorrichtungen mit entsprechend leistungsstarken Antrieben zum Einsatz, um in kurzer Zeit unter der Verwendung verhältnismäßig großer Werkzeuge große Mengen an Material zu zerspanen.

Wenn solche Werkstücke dann vereinzelt jedoch sehr feine Konturen aufweisen, so sind derartige Vorrichtungen, die für große Werkzeuge mit hoher Zerspanungsleistung ausgelegt sind, jedoch von Nachteil. Die Werkzeugträger solcher Vorrichtungen sind dazu konzipiert, große Kräfte aufzunehmen und verhältnismäßig schwere Werkzeuge zu verfahren. Hieraus resultieren regelmäßig niedrige Verfahrgeschwindigkeiten solcher Werkzeugträger verglichen mit Werkzeugträgern, die für leichtere Werkzeuge konzipiert sind, entsprechend geringere Kräfte aufnehmen müssen aber auch selbst eine kleinere Masse aufweisen, dadurch leichter verfahrbar sind.

In der Praxis findet daher die Bearbeitung von Werkstücken, die derart unterschiedliche Anforderungen an die Vorrichtungen stellen, mit denen sie bearbeitet werden, in verschiedenen Vorrichtungen statt. Oder es wird in Kauf genommen, dass die Dauer der Bearbeitung feiner Konturen unverhältnismäßig hoch ist. Beides ist nachteilig, da hier Zeiten entweder zum Umspannen der Werkstücke oder für die unverhältnismäßig hohe Bearbeitungsdauer aufgewendet werden müssen.

### Die Erfindung

Der Erfindung liegt daher die Aufgabe zugrunde, eine Vorrichtung und ein Verfahren zur spanabhebenden Bearbeitung aufzuzeigen, wobei die Bearbeitung großer Werkstücke, die jedoch zumindest vereinzelt auch sehr fein aufgelöste Konturen aufweisen, auf eine effizientere Art und Weise möglich ist.

Die Aufgabe wird gelöst durch eine Vorrichtung und ein Verfahren mit den Merkmalen der unabhängigen Ansprüche. Die Merkmale der abhängigen Ansprüche betreffen vorteilhafte Ausführungsformen.

Die erfindungsgemäße Vorrichtung weist eine Linearantriebsanordnung mit mindestens einem Linearantrieb auf, mit der eine Werkzeugaufnahme zur rotierbaren Aufnahme des Werkzeugs relativ zum Werkzeugträger verfahrbar an dem Werkzeugträger angeordnet ist.

Durch den Linearantrieb bzw. die Linearantriebe der Linearantriebsanordnung kann eine solche Werkzeugaufnahme zur rotierbaren Aufnahme des Werkzeugs relativ zu dem eigentlichen Werkzeugträger der Vorrichtung bewegt werden. Die rotierbare Aufnahme dient insbesondere der Aufnahme kleiner rotierender Werkzeuge, um eine Feinbearbeitung der Konturen zu ermöglichen. Hierfür weist die Werkzeugaufnahme vorzugsweise einen eigenen Rotationsantrieb auf. Dieser muss zum Antreiben kleiner Werkzeuge nur eine begrenzte Leistung aufbringen, kann daher ebenfalls verhältnismäßig leicht bzw. klein gebaut sein, weshalb die Linearantriebe der Linearantriebsanordnung nur verhältnismäßig kleine Massen bewegen müssen. Das Bewegen kleiner Massen wiederum ermöglicht die Realisierung vergleichsweise hohe Geschwindigkeiten, Beschleunigungen und Verzögerungen. Hierdurch können hohe Positionier- und Vorschubgeschwindigkeiten erreicht werden, auch ist das Beschleunigen und Bremsen der Werkzeugbewegung auf kleinstem Raum gut möglich.

Das erfindungsgemäße Verfahren sieht nun vor, das Werkzeug wahlweise direkt an dem Werkzeugträger oder an der an dem Werkzeugträger aufgenommenen Linearantriebsanordnung aufzunehmen. Abhängig von der jeweiligen Bearbeitungssituation kann so mit dem direkt am Werkzeugträger aufgenommenen Werkzeug eine Grobbearbeitung erfolgen, hier ist es möglich, aufgrund der größeren Lasten, die vom Werkzeugträger bewältigt werden können, größere und damit schwerere Werkzeuge zum Einsatz zu bringen, welche auch während der Bearbeitung entsprechend größere Reaktionskräfte verursachen. Für die Bearbeitung feiner Konturen können dann vorzugsweise kleinere und/oder leichtere Werkzeuge an der Linearantriebsanordnung angeordnet werden, die wiederum an dem Werkzeugträger aufgenommen ist. Die Linearantriebe der Linearantriebsanordnung ermöglichen so vergleichsweise schnelle Verfahrbewegungen und eine zügige Bearbeitung mit diesen Werkzeugen.

Es ist dabei in vorteilhafter Weise möglich, dass sich Bewegungen der Linearantriebe der Linearantriebsanordnungen und des Werkzeugträgers relativ zum Werkstück überlagern, so dass insgesamt eine noch schnellere Bewegungsgeschwindigkeit des Werkzeugs relativ zum Werkstück ermöglicht wird. Die erfindungsgemäße Vorrichtung weist hierfür vorzugsweise eine Vorrichtung auf, die die Bewegungen des Werkzeugträgers relativ zum Werkstück und der Linearantriebe der Linearantriebsanordnung aufeinander abstimmt, um eine resultierende Relativbewegung des Werkzeugs relativ zum Werkstück zu erzeugen.

Auf diese Weise wird es möglich, mit einer einzigen Maschine bzw. Vorrichtung, wie beispielsweise einem Bearbeitungszentrum, große Werkstücke, die gleichzeitig vergleichsweise feinstrukturierte Konturen aufweisen, auf eine effiziente Art und Weise zu erzeugen. Hierbei wird wahlweise zwischen der Bearbeitung mit einem an dem Werkzeugträger aufgenommenen Werkzeug und einem an der Linearantriebsanordnung aufgenommenen Werkzeug gewechselt. Um diesen Wechsel einfacher zu gestalten, weist die erfindungsgemäße Vorrichtung eine entsprechende Schnittstelle zur wahlweisen Aufnahme eines rotierbaren Werkzeugs oder eine Linearantriebsanordnung auf. Wird das Werkzeug direkt an dem Werkzeugträger aufgenommen, so kann der Rotationsantrieb für das Werkzeug zum einen vorrichtungsseitig zur Verfügung gestellt sein, d.h. über eine Welle oder ein ähnliches Übertragungsmittel am Werkzeugträger zur Verfügung gestellt werden, oder es wird eine Werkzeugaufnahme mit eigenem Rotationsantrieb alternativ zur Linearantriebsanordnung am Werkzeugträger aufgenommen. Beide Alternativen sind möglich.

Bei der Schnittstelle handelt es sich vorzugsweise um eine Schnellwechsel-Schnittstelle. Unter einer Schnellwechsel-Schnittstelle ist insbesondere eine Schnittstelle zu verstehen, bei der die beteiligten Komponenten, insbesondere die Linearantriebsanordnung und der Werkzeugträger miteinander in Eingriff gebracht und verbunden werden können, ohne dass hierbei größere Unterbrechungen der Bearbeitung des Werkstücks notwendig werden. Insbesondere bedeutet dies, dass keine, zumindest keine aufwendigen, Einmess- oder Einrichtarbeiten nach einem Wechsel anfallen, d.h. die Schnittstelle ist insbesondere derart gestaltet, dass die Linearantriebsanordnung in einer für die geforderte Bearbeitungsgenauigkeit hinreichend reproduzierbar definierten Position an dem Werkzeugträger aufgenommen wird.

Vorzugsweise ist der Werkzeugträger relativ zum Werkstück in drei Raumrichtungen verfahrbar. Damit wird es ermöglicht, auch bei der Bearbeitung mit direkt am Werkzeugträger aufgenommenem Werkzeug nahezu beliebige dreidimensionale Konturen des Werkstücks zu erzeugen. Dabei ist der Werkzeugträger vorzugsweise relativ zum Arbeitsraum der Vorrichtung in drei Raumrichtungen verfahrbar. Dies ermöglicht entsprechend die Erzeugung der dreidimensionalen Konturen, auch ohne dass hierfür das Werkstück bewegt werden muss. Insbesondere bei der Herstellung schwerer Werkstücke stellt dies einen Vorteil dar, da hier die Masse des Werkzeugträgers regelmäßig die kleinere zu bewegende Masse ist.

Die Linearantriebsanordnung kann vorteilhafterweise einen weiteren Linearantrieb neben dem wenigstens einen Linearantrieb aufweisen. Ein weiterer Linearantrieb ermöglicht es, entsprechend Bewegungen in wenigstens zwei unterschiedliche Raumrichtungen durch die Linearantriebsanordnung zu ermöglichen. Der weitere Linearantrieb ist hierzu vorzugsweise senkrecht zu dem ersten Linearantrieb angeordnet.

Der Linearantrieb und/oder der weitere Linearantrieb ermöglichen vorzugsweise Bewegungsgeschwindigkeiten des Werkzeugs relativ zum Werkzeugträger von mindestens 80 m/min, weiter vorzugsweise von wenigstens 120 m/min. Die Verwendung von Linearantrieben, die derartig schnelle Bewegungen ermöglichen, kann im Zusammenhang mit der vorliegenden Erfindung die gesamte Bearbeitungsgeschwindigkeit bei entsprechenden Werkstückgeometrien erheblich steigern. Dies gilt insbesondere auch für die vorteilhafte Verwendung von Linearantrieben, die Beschleunigungen bzw. Verzögerungen des Werkzeugs relativ zum Werkzeugträger von wenigstens 50 m/s², weiter vorzugsweise von wenigstens 80 m/s² ermöglichen. Insbesondere bei komplizierten Konturen, die eine Vielzahl von Beschleunigungs- und Abbremsvorgängen der Vorschub- und/oder Positionierbewegungen erfordern, erweisen sich Linearantriebe mit derartig hohen Beschleunigungs- bzw. Verzögerungswerten als vorteilhaft.

Vorzugsweise weist die Linearantriebsanordnung nach der vorliegenden Erfindung eine Masse von höchstens 35 kg auf. Es hat sich gezeigt, dass bereits bei verhältnismäßig kleinen Vorrichtungen bzw. Maschinen konventioneller Art Vorteile in der Bearbeitungsgeschwindigkeit durch eine erfindungsgemäße Ausgestaltung erzielt werden können. Hierfür dürfen die Linearantriebsanordnungen jedoch eine gewisse Gesamtmasse nicht überschreiten. In diesem Zusammenhang hat sich eine Höchstmasse von 35 kg, vorzugsweise von 25 kg für die Linearantriebsanordnung als vorteilhaft herausgestellt. Dabei umfasst diese Masse die Gesamtmasse der Linearantriebsanordnung, die mit dem Werkzeugträger verbunden ist, d.h. auch die linearantriebsanordnungsseitige, ggf. vorhandene Schnittstelle zum Werkzeugträger mit ihren mechanischen und/oder elektrischen Verbindungselementen sowie die durch die Linearantriebe bewegbare Werkzeugaufnahme mit ihrem Rotationsantrieb.

Bevorzugt ist die Linearantriebsanordnung um eine Schwenkachse, vorzugsweise um eine vertikale Schwenkachse, schwenkbar am Werkzeugträger aufgenommen.

### Weg zur Ausführung der Erfindung

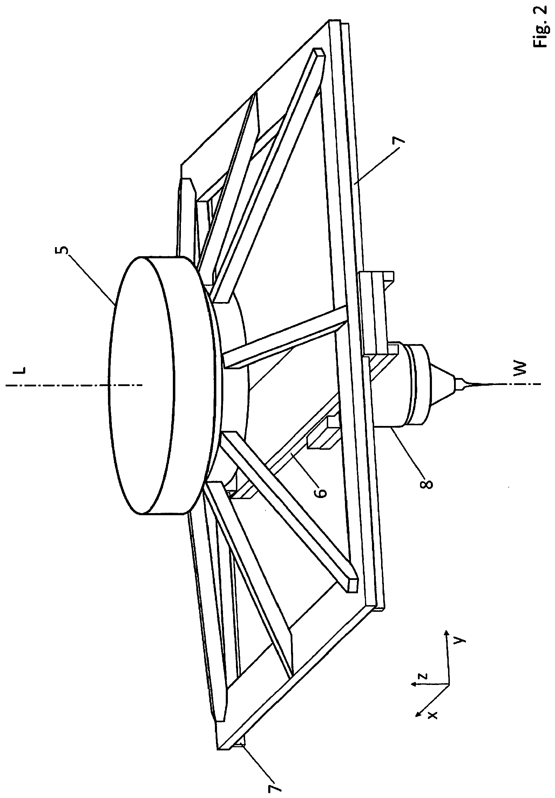

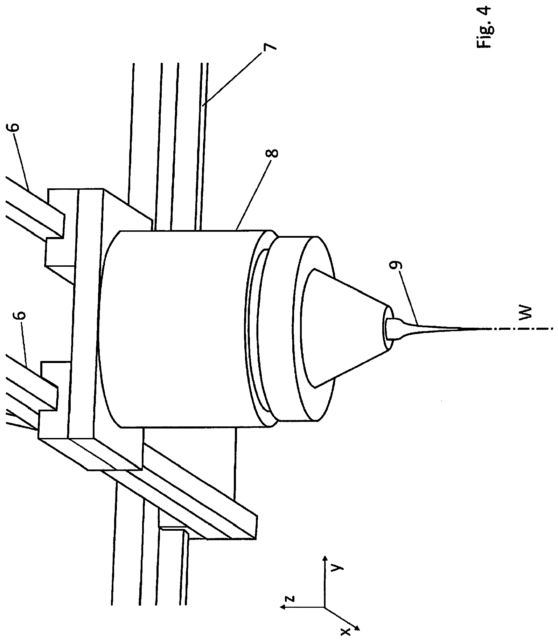

Die Erfindung wird im Folgenden anhand der Figuren 1 bis 4 schematisch näher erläutert:
Fig. 1 zeigt einen Teil einer beispielhaften erfindungsgemäßen Vorrichtung.
Fig. 2 zeigt eine beispielhafte erfindungsgemäße Linearantriebsanordnung.
Fig. 3 zeigt die beispielhafte erfindungsgemäße Linearantriebsanordnung aus einer anderen Perspektive.
Fig. 4 zeigt eine Detaildarstellung eines Ausschnitts aus Fig. 3.

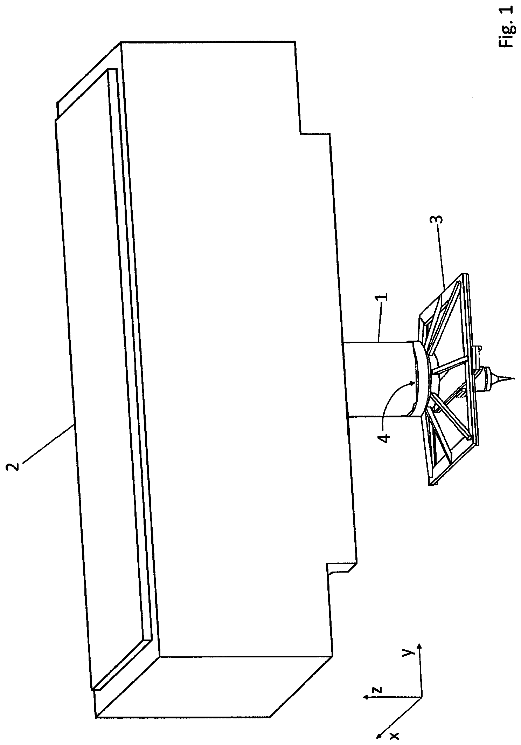

In Fig. 1 ist beispielhaft ein Teil einer erfindungsgemäßen Vorrichtung dargestellt. Der Werkzeugträger 1 ist im gezeigten Beispiel an einer Traverse 2 aufgenommen. Diese beispielhafte Art der Lagerung eines Werkzeugträgers einer erfindungsgemäßen Vorrichtung eignet sich insbesondere für Vorrichtungen mit vergleichsweise großen Arbeitsräumen, um große Werkstücke darin aufzunehmen. Die Traverse 2 überspannt bei einer derartigen Vorrichtung den Arbeitsraum. Der Werkzeugträger 1 kann dann regelmäßig in der vertikalen Richtung Z und/oder in der horizontalen Richtung Y entlang der Traverse 2 verfahren werden. Vorteilhafterweise ist die Traverse 2 selbst ebenfalls in der horizontalen Richtung X verfahrbar. Hierdurch können Vorschub und/oder Positionierbewegungen des Werkzeugträgers 1 in allen drei Raumrichtungen X, Y und Z realisiert werden.

Im dargestellten Beispiel ist an dem Werkzeugträger 1 eine Linearantriebsanordnung 3 aufgenommen. Die Linearantriebseinheit 3 ist um die Schwenkachse L schwenkbar mit dem Werkzeugträger 1 verbunden. Hierfür weist der Werkstückträger 1 eine entsprechend gestaltete Schnittstelle 4 auf. Die Linearantriebsanordnung 3 verfügt über eine korrespondierende Schnittstelle 5, um die Linearantriebsanordnung 3 mit dem Werkstückträger 1 verbinden zu können. Am Werkstückträger 1 können alternativ zur dargestellten Linearantriebsanordnung 3 auch rotierende Werkzeuge direkt mit dem Werkzeugträger 1 verbunden werden.

Die Linearantriebsanordnung 3 weist im gezeigten Beispiel einen ersten Linearantrieb 6 und einen zweiten Linearantrieb 7 auf. Der zweite Linearantrieb 7 ist durch zwei beabstandete Linearführungen realisiert und in vorteilhafter Weise mit seiner Bewegungsrichtung senkrecht zur Bewegungsrichtung des ersten Linearantriebs 6 angeordnet. Mit den Linearantrieben 6 und 7 kann im gezeigten Beispiel die Werkzeugaufnahme 8, die an der erfindungsgemäßen Linearantriebsanordnung 3 aufgenommen ist, in den horizontalen Richtungen X und Y relativ zum Werkzeugträger 1 verfahren werden.

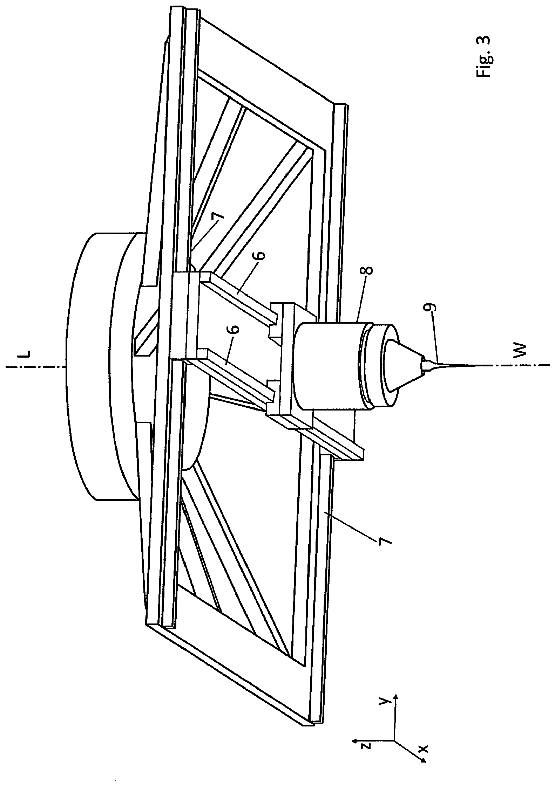

In Fig. 3 gut zu erkennen ist, dass im gezeigten Beispiel der erste Linearantrieb 6 ebenfalls zwei beabstandete Linearführungen aufweist. Die beabstandeten Linearführungen ermöglichen eine vergleichsweise steife und präzise Führung der beweglichen Komponenten der Linearantriebsanordnung bei einem gleichzeitig geringen Gewicht der Linearantriebsanordnung.

Das Werkzeug 9 ist um die Werkzeugachse W rotierbar in der Werkzeugaufnahme 8 aufgenommen. Die Werkzeugaufnahme 8 verfügt hierfür über einen entsprechenden Rotationsantrieb, um die Rotation des Werkzeugs 9 um die Werkzeugachse W und damit die Zerspanung des Werkstücks zu ermöglichen.

### Bezugszeichenliste

- 1: Werkzeugträger
- 2: Traverse
- 3: Linearantriebsanordnung
- 4: Schnittstelle Werkzeugträger
- 5: Schnittstelle Linearantriebsanordnung
- 6: Erster Linearantrieb
- 7: Zweiter Linearantrieb
- 8: Werkzeugaufnahme
- 9: Werkzeug
- X: horizontale Richtung
- Y: horizontale Richtung
- Z: vertikale Richtung
- L: Schwenkachse
- W: Werkzeugachse

## Patentansprüche

1. Vorrichtung zur spanabhebenden Bearbeitung von Werkstücken mit einem um eine Werkzeugachse (W) rotierenden Werkzeug (9), mit einer Werkstückaufnahme und einem Werkzeugträger (1), wobei das Werkzeug (9) dazu vorgesehen ist, durch sukzessives Zerspanen der Werkstücke diesen eine vorbestimmte Geometrie zu geben, wobei der Werkzeugträger (1) zur Ermöglichung von Positionier- und/oder Vorschubbewegungen bei der Bearbeitung des Werkstücks mit einem an dem Werkzeugträger (1) aufgenommenen rotierbaren Werkzeug (9) relativ zu dem Werkstück verfahrbar ist, wobei die Vorrichtung eine Linearantriebsanordnung (3) mit wenigstens einem ersten Linearantrieb (6) aufweist, mit der eine Werkzeugaufnahme (8) zur rotierbaren Aufnahme des Werkzeugs (9) relativ zum Werkzeugträger (1) verfahrbar an dem Werkzeugträger (1) angeordnet ist, **dadurch gekennzeichnet, dass**
der Werkzeugträger (1) eine Schnittstelle (4) zur wahlweisen Aufnahme eines rotierbaren Werkzeugs (9) oder der Linearantriebsanordnung (3) aufweist.

2. Vorrichtung nach Anspruch 1, **dadurch gekennzeichnet, dass** der Werkzeugträger (1) relativ zum Werkstück in drei Raumrichtungen (X, Y, Z) verfahrbar ist.

3. Vorrichtung nach einem der vorigen Ansprüche, **dadurch gekennzeichnet, dass** der Werkzeugträger (1) relativ zum Arbeitsraum der Vorrichtung in drei Raumrichtungen (X, Y, Z) verfahrbar ist.

4. Vorrichtung nach einem der vorigen Ansprüche, **dadurch gekennzeichnet, dass** die Linearantriebsanordnung (3) einen weiteren zweiten Linearantrieb (7) aufweist.

5. Vorrichtung nach Anspruch 4, **dadurch gekennzeichnet, dass** der weitere Linearantrieb (7) senkrecht zu dem ersten Linearantrieb (6) angeordnet ist.

6. Vorrichtung nach einem der vorigen Ansprüche, **dadurch gekennzeichnet, dass** der Linearantrieb (6) und/oder der weitere Linearantrieb (7) Bewegungsgeschwindigkeiten des Werkzeugs relativ zum Werkzeugträger von wenigstens 80 m/min- ermöglicht.

7. Vorrichtung nach einem der vorigen Ansprüche, **dadurch gekennzeichnet, dass** der erste Linearantrieb (6) und/oder der zweite Linearantrieb (7) Beschleunigungen und/oder Verzögerungen des Werkzeugs relativ zum Werkzeugträger (1) von wenigstens 50 m/s² ermöglicht.

8. Vorrichtung nach einem der vorigen Ansprüche, **dadurch gekennzeichnet, dass** die Linearantriebsanordnung (3) um eine Schwenkachse (L) schwenkbar am Werkzeugträger (1) aufgenommen ist.

9. Verfahren zum Betreiben einer Vorrichtung zur spanabhebenden Bearbeitung von Werkstücken mit einer Vorrichtung nach einem der vorigen Ansprüche, wobei zur spanabhebenden Bearbeitung ein rotierendes Werkzeug (9) wahlweise an einem Werkzeugträger (1) oder an einer an dem Werkzeugträger (1) aufgenommenen Linearantriebsanordnung (3) aufgenommen wird und wobei das rotierende Werkzeug (9) durch sukzessives Zerspanen des Werkstückes diesem eine vorbestimmte Geometrie gibt.

## Claims

1. Apparatus for machining workpieces with a tool (9) rotating about a tool axis (W), with a workpiece seat and a tool holder (1), wherein the tool (9) is provided to give the workpieces a predetermined geometry by means of successive machining operations, wherein the tool holder (1) is movable relative to the workpiece so as to permit positioning and/or feeding movements during the processing of the workpiece with a rotatable tool (9) mounted on the tool holder (1), wherein the apparatus includes a linear drive arrangement (3) with at least a first linear drive (6), with which a tool seat (8) for the rotatable mounting of the tool (9) is arranged on the tool holder (1) so as to be movable relative to the tool holder (1), **characterized in that**
the tool holder (1) has an interface (4) for the selective mounting of a rotatable tool (9) or the linear drive arrangement (3).

2. The apparatus according to claim 1, **characterized in that** the tool holder (1) is movable relative to the workpiece in three spatial directions (X, Y, Z).

3. The apparatus according to one of the preceding claims, **characterized in that** the tool holder (1) is movable relative to the workspace of the apparatus in three spatial directions (X, Y, Z).

4. The apparatus according to one of the previous claims, **characterized in that** the linear drive arrangement (3) includes a further second linear drive (7).

5. The apparatus according to claim 4, **characterized in that** the further linear drive (7) is arranged perpendicularly to the first linear drive (6).

6. The apparatus according to one of the previous claims, **characterized in that** the linear drive (6) and/or the further linear drive (7) permits movement speeds of the tool relative to the tool holder of at least 80 m/min.

7. The apparatus according to one of the preceding claims, **characterized in that** the first linear drive (6) and/or the second linear drive (7) permits accelerations and/or decelerations of the tool relative to the tool holder (1) of at least 50 m/s².

8. The apparatus according to one of the previous claims, **characterized in that** the linear drive arrangement (3) is mounted on the tool holder (1) so as to be pivotable about a pivot axis (L).

9. A method for operating an apparatus for machining workpieces with an apparatus according to one of the preceding claims, wherein, for machining, a rotating tool (9) is selectively mounted on a tool holder (1) or on a linear drive arrangement (3) mounted on the tool holder (1) and wherein the rotating tool (9) gives the workpiece a predetermined geometry by means of successive machining operations.

## Revendications

1. Dispositif d'usinage par enlèvement de copeaux de pièces avec un outil (9) en rotation autour d'un axe d'outil (W), avec un porte-outil et un support d'outil (1), sachant que l'outil (9) est prévu pour conférer à des pièces une géométrie prédéterminée par enlèvements de copeaux successifs de celles-ci, sachant que le support d'outil (1) peut être déplacé par rapport à la pièce pour permettre des déplacements de positionnement et/ou d'avance lors de l'usinage de la pièce avec un outil (9) en rotation logé sur le support d'outil (1), sachant que le dispositif comporte un système d'entraînement linéaire (3) avec au moins un premier système d'entraînement linéaire (6), avec lequel un porte-outil (8) pour le logement en rotation de l'outil (9) est disposé par rapport au support d'outil (1) pouvant se déplacer sur le support d'outil (1), **caractérisé en ce que**
le support d'outil (1) comporte une interface (4) pour la mise en place selon nécessité d'un outil en rotation (9) ou du système d'entraînement linéaire (3).

2. Dispositif selon la revendication 1, **caractérisé en ce que** le support d'outil (1) peut être déplacé par rapport à la pièce en trois directions dans l'espace (X, Y, Z).

3. Dispositif selon l'une quelconque des revendications précédentes, **caractérisé en ce que** le support d'outil (1) peut être déplacé par rapport à l'espace de travail du dispositif en trois directions dans l'espace (X, Y, Z).

4. Dispositif selon l'une quelconque des revendications précédentes, **caractérisé en ce que** le système d'entraînement linéaire (3) comporte un autre deuxième système d'entraînement linéaire (7).

5. Dispositif selon la revendication 4, **caractérisé en ce que** l'autre système d'entraînement linéaire (7) est disposé perpendiculairement au premier système d'entraînement linéaire (6).

6. Dispositif selon l'une quelconque des revendications précédentes, **caractérisé en ce que** le système d'entraînement linéaire (6) et/ou l'autre système d'entraînement linéaire (7) permet des vitesses de déplacement de l'outil par rapport au support d'outil d'au moins 80 m/min.

7. Dispositif selon l'une quelconque des revendications précédentes, **caractérisé en ce que** le premier système d'entraînement linéaire (6) et/ou le deuxième système d'entraînement linéaire (7) permet des accélérations et/ou des retardements de l'outil par rapport au support d'outil (1) d'au moins 50 m/s².

8. Dispositif selon l'une quelconque des revendications précédentes, **caractérisé en ce que** le système d'entraînement linéaire (3) est logé sur le support d'outil (1) pouvant pivoter autour d'un axe de pivotement (L).

9. Procédé destiné à faire fonctionner un dispositif pour l'usinage par enlèvement de copeaux de pièces avec un dispositif selon l'une quelconque des revendications précédentes, sachant que pour l'usage par enlèvement de copeaux, un outil tournant (9) est logé selon nécessité sur un support d'outil (1) ou sur un système d'entraînement linéaire (3) logé sur le support d'outil (1) et sachant que par enlèvements de copeaux successifs de la pièce, l'outil tournant (9) confère à celle-ci une géométrie prédéterminée.
